# EUROPÄISCHE PATENTSCHRIFT

(11) **EP 2 421 704 B1**
(45) Veröffentlichungstag und Bekanntmachung des Hinweises auf die Patenterteilung: **15.05.2013**
(21) Anmeldenummer: 10715217.5
(22) Anmeldetag: 19.04.2010
(51) Int. Cl.: B32B 17/10, B60J 1/00, C03C 27/00

(54) **TRANSPARENTES VERBUNDGLAS UND DESSEN VERWENDUNG**
TRANSPARENT LAMINATED GLASS AND USE THEREOF
VERRE COMPOSITE TRANSPARENT ET SON UTILISATION

(30) Priorität: 20.04.2009 DE 102009017805
(43) Veröffentlichungstag der Anmeldung: 29.02.2012
(73) Patentinhaber: Saint-Gobain Glass France, 92400 Courbevoie (FR)
(72) Erfinder: OFFERMANN, Volkmar, 52249 Eschweiler (DE); DUNKMANN, Benno, B-4000 Liège (BE)
(74) Vertreter: Lendvai, Tomas
(86) Internationale Anmeldenummer: PCT/EP2010/055108
(87) Internationale Veröffentlichungsnummer: WO 2010/121986

(56) Entgegenhaltungen:
- EP-A1- 0 004 001
- EP-A2- 0 908 302
- DE-A1- 2 703 785
- DE-A1- 3 919 290
- DE-B1- 2 758 581
- US-A- 3 592 726
- US-A- 3 799 817

## Beschreibung

Die vorliegende Erfindung betrifft ein transparentes Verbundglas für Fahrzeugverglasungen.

Außerdem betrifft die vorliegende Erfindung eine neue Verwendung des neuen transparenten Verbundglases.

Aus der Patentschrift US 7,070,863 B2 ist eine Verbundglasscheibe für Automobilverglasungen bekannt, die mindestens eine Glasscheibe mit einer Dicke zwischen 0,8 mm und 1,7 mm enthält. Die Kanten-Druckspannung beträgt 20 MPa bis 80 MPa und ist damit im Vergleich zu der Druckspannung von 5 MPa bis 60 MPa im Zentrum der Glasscheibenfläche erhöht.

Aus der DE 44 15 878 C2 ist eine Verbundglasscheibe für Fahrzeuge bekannt, die Dünngläser mit einer Dicke zwischen 0,2 mm und 1,5 mm und eine Kunststoffscheibe enthalten. Zum Ausgleich von mechanischen Spannungen zwischen den einzelnen Materialien wird eine Kleberschicht offenbart.

US 6,270,605 B1 beschreibt ein Verfahren zur Herstellung einer gekrümmten mehrschichtigen Glas- und Polymer-Verbundscheibe, enthaltend zwei dünne Gläser mit einer dazwischen liegenden thermoplastischen Schicht mit einem spezifischen Gewicht, das geringer als Glas ist. Jede Glasschicht hat eine Dicke, die ein 1/5 oder weniger der Gesamtdicke des Verbunds beträgt.

US 5,589,272 A offenbart eine transparente Glas- und Polymer-Verbundscheibe mit Glasdicken zwischen 0,3 mm und 0,7 mm. Zwischen den Glas- und Polymer-Scheiben befinden sich Polymerschichten die einerseits als Haftvermittler wirken und anderseits als elastische Zwischenschicht mechanische Spannungen innerhalb des Laminats ausgleichen.

US 3,799,817 A offenbart ein Verbundglas aus einer Außenscheibe mit einer Dicke von 1,5 mm bis 4 mm und einer Innenscheibe mit einer Dicke von 1 mm bis 2,5 mm.

US 3,592,726 A offenbart ein Verbundglas aus einer Außenscheibe mit einer Dicke von 1,27 mm bis 3,04 mm und einer Innenscheibe mit einer Dicke von 1,01 mm bis 2,28 mm.

EP 0 908 302 A2 offenbart ein Verbundglas aus einer Außenscheibe mit einer Dicke von 1,5 mm bis 3,2 mm und einer Innenscheibe mit einer Dicke von 2 mm bis 4 mm.

DE 27 58 581 B1 offenbart ein Verbundglas aus einer Außenscheibe mit einer Dicke von 2 mm bis 5 mm und einer Innenscheibe mit einer Dicke von weniger als 1,5 mm.

EP 0 004 001 A1 offenbart ein Verbundglas aus einer Außenscheibe mit einer Dicke von 2,2 mm bis 3 mm und einer Innenscheibe mit einer Dicke von 1,2 mm bis 2,6 mm.

DE 39 19 290 A1 offenbart ein Verbundglas aus einer dünneren Scheibe mit einer Dicke von weniger als 2 mm und einer dickeren Scheibe mit einer Dicke von mindestens 3 mm.

DE 27 03 785 A1 offenbart ein Verbundglas aus einer Außenscheibe mit einer Dicke von mindestens 2 mm und einer Innenscheibe mit einer Dicke von höchstens 1 mm.

Bei einem symmetrischen Verbundglas haben die Innenscheibe und die Außenscheibe die gleiche Scheibendicke. Bei einem unsymmetrischen Aufbau beinhaltet das Verbundglas eine Innenscheibe und Außenscheibe mit unterschiedlichen Dicken.

Die beschriebenen Verbundglasscheiben haben den Nachteil, dass sie mindestens eine der wesentlichen mechanischen und optischen Anforderungen an Automobilverglasungen wie Steifigkeit und Festigkeit, Steinschlagfestigkeit, optische Verzerrung im Sichtfeld, Abrieb- und Kratzbeständigkeit der Oberflächen unter reduziertem Gesamtgewicht des Verbundglases nicht erfüllen.

Der vorliegenden Erfindung liegt die Aufgabe zugrunde, ein Produkt bereitzustellen, dass die Anforderungen an Fahrzeugverglasungen zur mechanischen Steifigkeit und Festigkeit, Steinschlagfestigkeit, optischen Verzerrung im Sichtfeld, Abrieb- und Kratzbeständigkeit der Oberflächen unter reduziertem Gesamtgewicht des Verbundglases erfüllt.

Außerdem liegt der vorliegenden Erfindung die Aufgabe zu Grunde, eine neue Verwendung des transparenten Verbundglases bereitzustellen.

Die Aufgabe der Erfindung wird durch die im Patentanspruch 1 aufgeführten Merkmale gelöst. Das transparente Verbundglas enthält eine transparente Außenscheibe mit einer Dicke von 1,45 mm bis 1,8 mm, bevorzugt 1,75 mm bis 1,8 mm, mindestens eine Polymerschicht mit einer Dicke von 0,5 mm bis 4,0 mm und einer transparenten Innenscheibe mit einer Dicke von 1,0 mm bis 1,4 mm, wobei die mindestens eine Polymerschicht Ethylen-Vinyl-Acetate, plastizitierte Polyvinyl-Butyrale, Polyurethane, Polycarbonate, Polyethylen-Terephthalate und/oder lonomere sowie Copolymere und/oder Kombinationen davon enthält und das Verhältnis von der Dicke der transparenten Außenscheibe zu der Summe der Dicken der transparenten Außenscheibe und der transparenten Innenscheibe 0,509 bis 0,643, bevorzugt 0,563 bis 0,592 beträgt.

Nicht zuletzt wurde die neue Verwendung des erfindungsgemäßen Verbundglases in der Fahrzeugverglasung, bevorzugt als Windschutzscheiben und besonders bevorzugt als Windschutzscheiben mit hoher Steinschlagfestigkeit gefunden.

Die neue Erfindung erzielt durch einen neuen unsymmetrischen Verbundaufbau von dünnen Scheiben und mindestens einer Polymerschicht eine Gewichtsreduzierung. Die Anforderungen an Sicherheitsverglasungen in Fahrzeugen (ECE-R 43:2004) und insbesondere Anforderungen an die mechanische Steifigkeit und Festigkeit, Steinschlagfestigkeit, optische Verzerrung, Abrieb- und Kratzbeständigkeit der Oberflächen sind erfüllt.

In einer bevorzugten Ausführungsform ist eine dickere, mindestens einlagige, Polymerschicht verwendet. Damit erhöht sich die mechanische Steifigkeit des Verbundes. Bevorzugt beträgt die Dicke der mindestens einlagigen Polymerschicht 0,8 mm bis 3,8 mm. Die Gewichtserhöhung des Verbundglases mit erhöhter Polymerschichtdicke ist gering aufgrund der geringeren spezifischen Dichte der Polymere im Vergleich zu der spezifischen Dichte von anorganischen Gläsern.

Für die transparente Außenscheibe und transparente Innenscheibe wird bevorzugt Glas verwendet. Im Grunde kommen alle Gläser in Betracht, wie sie üblicherweise für die Herstellung von Verbundgläsem, insbesondere von Verbundsicherheitsgläsern, verwendet werden. Silikatgläser nach DIN-EN 572 1 werden besonders bevorzugt.

In einer vorteilhaften Ausgestaltung des unsymmetrischen Aufbaus ist die Dicke der transparenten Innenscheibe kleiner der Dicke der transparenten Außenscheibe um einen unsymmetrischen Aufbau zu erzielen. Dadurch werden überraschend die mechanischen Eigenschaften verbessert, insbesondere die Steinschlagfestigkeit. Bevorzugt ist das Dickenverhältnis der Dicke d_a der transparenten Außenscheibe zu der Summe der Dicke d_a der transparenten Außenscheibe und der Dicke d_i der transparenten Innenscheibe 0,552 bis 0,571. Das Dickenverhältnis berechnet sich nach der Gleichung d_a/(d_a+d_i).

Erfindungsgemäß beträgt die Dicke der transparenten Außenscheibe 1,6 bis 1,8 mm und die Dicke der transparenten Innenscheibe 1,2 bis 1,4 mm.

Mindestens eine Polymerschicht ist im Kontakt mit der Glasoberfläche. Diese beinhaltet Ethylen-Vinyl-Acetate (EVA), plastizitierte Polyvinyl-Butyrale (PVB), Polyurethane und/oder lonomere sowie Copolymere und/oder Gemische davon. Materialien wie EVA besitzen eine gute Haftung an Silikatgläsern. Ein Haftvermittler zwischen Glas und Polymer ist nicht notwendig. Der Verbundprozess ist damit weniger komplex und kostenintensiv.

Ein Mehrschichtsystem von Polymerschichten zwischen der Außenscheibe und der Innenscheibe ist besonders bevorzugt, um den Abstand zwischen Außenglas und Innenglas zu erhöhen. Die mechanische Steifigkeit des erfindungsgemäßen Verbundglases wird dadurch erhöht.

Zur weiteren Erhöhung ihrer Stabilität und mechanischen Steifigkeit kann das erfindungsgemäße Verbundglas sowohl in Längsrichtung und/oder in Querrichtung zwei- oder dreidimensional gebogen sein.

Die planaren oder gekrümmten Innenscheiben und Außenscheiben und die mindestens eine Polymerschicht werden bevorzugt in einem Autoklav-Prozess verbunden. Durch Druck und Wärme wird ein dauerhafter Verbund erzielt.

Die Fläche des erfindungsgemäßen Verbundglases kann breit variieren und richtet sich nach der erfindungsgemäßen Verwendung. Die Fläche kann einige 10 Quadratzentimeter für Seitenscheiben bis zu mehreren Quadratmetern für Windschutzscheiben, Heckscheiben oder Glasdächer für Kraftfahrzeuge betragen.

Die Glasscheibe ist vorzugsweise als Wärmeschutzscheibe ausgebildet, indem entweder eine oder beide Einzelscheiben der Verbundglasscheibe aus einem eingefärbten Wärmeschutzglas bestehen und/oder mit einer Wärmestrahlen reflektierenden Beschichtung versehen sind.

In einer weiteren Ausführungsform weist mindestens eine der Polymerschichten eine Beschichtung auf, die Infrarotstrahlung absorbiert oder reflektiert. Bevorzugt enthält die Polymerschicht, die Infrarotstrahlung absorbiert oder reflektiert, Polyethylen-Terephthalate sowie Copolymere davon.

In einer vorteilhaften Ausgestaltung der Erfindung ist die transparente Innenscheibe oder transparente Außenscheibe auf der dem Polymer zugewandten Seite selbst ganz oder teilweise mit einer Infrarotstrahlung absorbierenden oder reflektierenden Schicht beschichtet. Dadurch kann die Fahrzeugverglasung in den Transmissionseigenschaften den Erfordernissen der Temperatur im Innenraum von Fahrzeugen angepasst werden. Im Grunde kommen alle üblichen und bekannten Infrarotstrahlung abschirmenden Materialien in Betracht, die unter den Bedingungen der Herstellung und der Verwendung des erfindungsgemäßen Verbundglases stabil sind. Bevorzugt werden dünne Schichten im Bereich von 1 nm bis 1000 nm auf dem Glas abgeschieden. Diese Schichten können mittels Kathodenzerstäubungsverfahren (Sputtern) oder chemischer Abscheidung aus der Gasphase aufgebracht werden. Die mindestens eine Schicht kann Silber oder leitfähige transparente Oxide wie dotiertes Zinnoxid, Zinkoxid oder Gemische davon enthalten.

Teilbereiche des transparenten Verbundglases können durch eine lichtundurchlässige Beschichtung verdeckt werden. Bevorzugt wird die transparente Außenscheibe oder Innenscheibe auf der dem Polymer zugewandten Seite teilweise mit einem Siebdruck beschichtet. Durch den Siebdruck kann die Außenscheibe ganz oder teilweise beschichtet werden, bevorzugt wird umlaufend der Randbereich des erfindungsgemäßen Verbundglases bedruckt. Insbesondere ist die lichtundurchlässige Beschichtung rahmenförmig entlang der Kante mit einer Breite von bevorzugt 10 mm bis 300 mm ausgeführt. Durch die Abdeckung werden beispielsweise mögliche Inhomogenitäten der Transmissionseigenschaften oder Verbindungs- und Klebevorrichtungen verdeckt. Die lösemittelhaltigen oder chemisch reaktiven Farbschichten, bevorzugt schwarze Farbe, mit Dicken von 1 µm bis 500 µm werden über bekannte Temperaturprozesse dauerhaft stabilisiert.

Das erfindungsgemäße Verbundglas erfüllt weiter die Anforderungen an VerbundVerglasungen im Fahrzeugbau nach ECE-R 43:2004 hinsichtlich der Bruchstruktur, mechanischen Festigkeit, der optischen Eigenschaften und der Beständigkeit gegen äußere Einwirkungen wie Bestrahlung, Feuchtigkeit und Abrieb. Das Verbundglas erfüllt insbesondere die Anforderungen an die mechanische Steifigkeit und Steinschlagfestigkeit. Das erfindungsgemäße Verbundglas kann entsprechend bevorzugt als Verglasung von Fahrzeugen verwendet werden.

Eine Verglasung für Fahrzeuge muss wegen der auf die Hülle einwirkenden Kräfte, beispielsweise durch Windkräfte bei höheren Fahrgeschwindigkeiten und wegen der

Torsionsbeanspruchungen, die auf die Karosserie einwirken können, eine hohe Formstabilität und Verwindungssteifigkeit aufweisen. Das erfindungsgemäße Verbundglas ermöglicht Rand-Druckspannungen am Übergang von der Glasoberfläche zum Kantenschliff mit einem Betrag von größer/gleich 8 MPa welcher den typischen Anforderungen im Kraftfahrzeugbau entspricht.

Zur Erhöhung der Steinschlagfestigkeit sind die Zugspannungen in der Außenscheibe minimiert. Am Übergang von der Glasoberfläche zum Kantenschtiff ist der Betrag kleiner als 7 MPa, welcher den typischen Anforderungen im Kraftfahrzeugbau entspricht. Geringe mechanische Zugspannungen in der Außenscheibe begünstigen eine hohe Steinschlagfestigkeit. Mechanische Spannungen können mit der Methode von Sönarmont- oder Friedel gemessen werden. Ein geeignetes Messgerät ist beispielsweise der "Edge stress Master" der Fa. SHARPLESS STRESS ENGINEERS LTD.

Die Steinschlagfestigkeit eines Verbundglases kann über die Bruchwahrscheinlichkeit des Verbundglases beim Auftreffen eines Projektils mit einer definierten Form und definierter kinetischer Energie E bestimmt werden. Es kann die Grenzenergie E_t des Projektils definiert werden, bei der die Bruchwahrscheinlichkeit bei 50 % liegt. Die Grenzenergie E_t ist proportional zum Quadrat der Dicke d_a der Außenscheibe, dividiert durch die Summe aus der Dicke d_a der Außenscheibe und der Dicke d_i der Innenscheibe.

Die optische Verzerrung im Sichtfeld bei Fahrzeugverglasungen ist insbesondere bei dünnen Außenscheiben und Innenscheiben ein kritischer Faktor. Die optische Verzerrung von Verbundverglasungen beträgt innerhalb der Sichtzone A kleiner/gleich 2 Bogenminuten und insbesondere kleiner 1 Bogenminute (beschrieben in der ECE-R 43:2004 A3/9.2).

Bestehen die Innenscheibe und die Außenscheibe aus Silikatglas ist eine ausreichende Abrieb- und Kratzstabilität entsprechend einem Verbundglas nach dem Stand der Technik gegeben. Ein Abriebtest ist in der ECE-R 43:2004, Prüfung A1416.1 beschrieben.

In einer bevorzugten Ausgestaltung weist die Rand-Druckspannung des Verbundglases einen Betrag von größer/gleich 8 MPa auf.

In einer bevorzugten Ausgestaltung weist die Rand-Zugspannung der transparenten Außenscheibe einen Betrag von kleiner/gleich 7 MPa auf.

In einer bevorzugten Ausgestaltung ist der Maximalwert der optischen Verzerrung im Zentrum der Verbundglasfläche kleiner/gleich 1 Bogenminute.

Das Verhältnis der Dicke der Innenscheibe zur Dicke der Außenscheibe beeinflusst wesentlich die mechanische Festigkeit und Steifigkeit, Steinschlagfestigkeit und optischen Eigenschaften. Bevorzugte Kombinationen sind in Tabelle 1 aufgelistet.

**Tabelle 1**

| Innenscheibe Dicke (d_i) in [mm] | Außenscheibe Dicke (d_a) in [mm] | d_a/(d_i+d_a) [.] |
|---|---|---|
| 1,4 | 1,8 | 0,563 |
| 1,3 | 1,7 | 0,567 |
| 1,3 | 1,6 | 0,552 |
| 1,2 | 1,6 | 0,571 |
| 1,1 | 1,4 | 0,560 |

Ein Ausführungsbeispiel der Erfindung ist in der Zeichnung dargestellt und wird im Folgenden näher beschrieben. Figuren 1 bis 3 sind schematische Darstellungen, die das Prinzip der Erfindung veranschaulichen. Die schematischen Darstellungen brauchen nicht maßstabsgetreu zu sein.

Es zeigen
- Fig. 1: einen Querschnitt durch ein symmetrisches transparentes Verbundglas nach dem Stand der Technik,
- Fig. 2: einen Querschnitt durch ein erfindungsgemäßes unsymmetrisches transparentes Verbundglas mit verringerten Glasdicken und
- Fig. 3: einen Querschnitt durch das erfindungsgemäße unsymmetrische transparente Verbundglas mit weiter verringerten Glasdicken und einem erhöhten Abstand zwischen Innenscheibe und Außenscheibe.

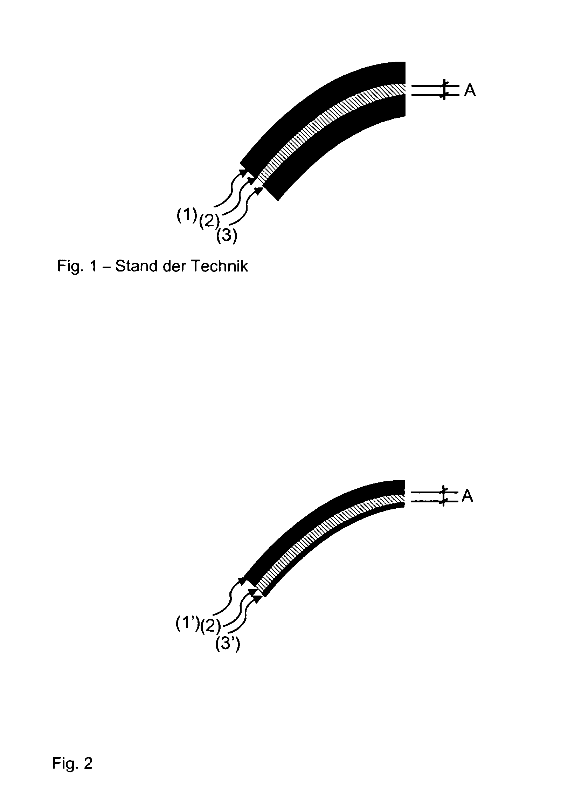

In den Figuren 1 bis 3 haben die Bezugszeichen folgende Bedeutung:
(1) Transparente Außenscheibe
(2) PVB Verbundfolie
(3) Transparente Innenscheibe
(1') Transparente Außenscheibe mit verringerter Dicke
(2') PVB Verbundfolie mit erhöhter Schichtdicke
(3') Transparente Innenscheibe mit verringerter Dicke
(A) Abstand zwischen Außenscheibe und Innenscheibe
(A') Erhöhter Abstand zwischen Außenscheibe und Innenscheibe
(1 ") Transparente Außenscheibe mit weiter verringerter Dicke
(3") Transparente Innenscheibe mit weiter verringerter Dicke

Ein Vergleichsbeispiel nach dem Stand der Technik ist in Figur 1 dargestellt. Das Verbundglas wurde symmetrisch mit einer Außenscheibe (1) einer Dicke 2,1 mm und einer Innenscheibe (3) mit einer Dicke von 2,1 mm in einem Autoklav-Prozess hergestellt. Es wurde eine übliche PVB-Verbundfolie (2) mit einer Dicke von 0,76 mm eingesetzt. Der Abstand (A) zwischen der Innenscheibe (3) und der Außenscheibe (1) betrug entsprechend etwa 0,76 mm.

Ein erfindungsgemäßes Ausführungsbeispiel ist in Figur 2 dargestellt. Das Verbundglas wurde unsymmetrisch mit einer gebogenen Außenscheibe (1') einer Dicke von 1,8 mm und einer gebogenen Innenscheibe (3') mit einer Dicke von 1,4 mm in einem Autoklav-Prozess hergestellt. Es wurde eine übliche PVB-Verbundfolie (2) mit einer Dicke von 0,76 mm eingesetzt. Der Abstand (A) zwischen der Innenscheibe (3') und der Außenscheibe (1') betrug entsprechend etwa 0,76 mm. Der Betrag der mechanischen Zugspannungen der transparenten Außenscheibe (1') wurde mit kleiner 7 MPa gemessen und war gegenüber dem Vergleichsbeispiel erniedrigt. Die Steinschlagfestigkeit des erfindungsgemäßen Substrates hat sich gegenüber dem Vergleichsbeispiel erhöht. Die kinetische Grenzenergie E_t eines Projektils bei der eine Bruchwahrscheinlich von 50% des Verbundglases gemessen wurde, hat sich um 25 % gegenüber dem Vergleichsbeispiel erhöht. Der Betrag der mechanischen Druckspannungen des Verbundsglases wurde größer 10 MPa gemessen. Die optische Verzerrung in Zone A lag im Bereich kleiner 1 Bogenminute. Das Gewicht der Scheibe wurde verringert.

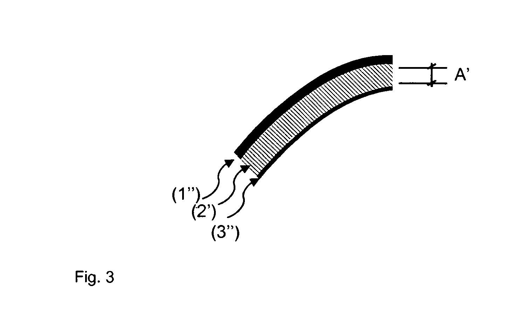

In Figur 3 ist eine Variation des erfindungsgemäßen transparenten Verbundglases dargestellt. Das Verbundglas wurde unsymmetrisch mit einer Außenscheibe einer Dicke von 1,7 mm (1") und einer Innenscheibe (3") mit einer Dicke von 1,3 mm in einem Autoklav-Prozess hergestellt. Es wurde eine mehrlagige Polymerschicht enthaltend PVB-Verbundfolie (2') mit einer Dicke von 0,86 mm verwendet. Der Abstand (A') zwischen der Innenscheibe (3") und der Außenscheibe (1 ") betrug entsprechend etwa 0,86 mm. Die kinetische Grenzenergie E_t eines Projektils bei der eine Bruchwahrscheinlich von 50% des Verbundglases gemessen wurde hat sich um 25 % gegenüber dem Vergleichsbeispiel erhöht. Der Betrag der mechanischen Druckspannungen des Verbundsglases wurde größer 10 MPa gemessen. Die optische Verzerrung in Zone A lag im Bereich kleiner 1 Bogenminute. Das Gewicht der Scheibe wurde gegenüber dem vorhergehenden Ausführungsbeispiel weiter verringert.

Die Ergebnisse aus dem Vergleichsbeispiel (Fig.1) und den Ausführungsbeispielen (Fig. 2 und Fig.3) sind in Tabelle 2 dargestellt.

**Tabelle 2**

| Beispiel | Außenscheibe | | PVB-Verbundfolie | | Innenscheibe | | Steinschlagfestigkeit | Gewicht |
|---|---|---|---|---|---|---|---|---|
| | Bezug | Dicke [mm] | Bezug | Dicke [mm] | Bezug | Dicke [mm] | | |
| Fig. 1 | (1) | 2,1 | (2) | 0,76 | (3) | 2,1 | - | - |
| Fig. 2 | (1') | 1,8 | (2) | 0,76 | (3') | 1,4 | verbessert | Abnahme |
| Fig. 3 | (1") | 1,7 | (2') | 0,86 | (3") | 1,3 | verbessert | Stärkere Abnahme |

Das erfindungsgemäße Verbundglas zeigt überraschend und unerwartet eine verbesserte Steinschlagfestigkeit.

## Patentansprüche

1. Transparentes Verbundglas für Fahrzeugverglasungen enthaltend eine transparente Außenscheibe (1) aus Silikatglas mit einer Dicke von 1,6 mm bis 1,8 mm, mindestens eine Polymerschicht (2) mit einer Dicke von 0,5 mm bis 4,0 mm und eine transparente Innenscheibe (3) aus Silikatglas mit einer Dicke von 1,2 mm bis 1,4 mm, wobei die mindestens eine Polymer- Schicht Ethylen-Vinyl-Acetate, plastizitierte Polyvinyl-Butyrale, Polyurethane, Polycarbonate, Polymethylen-Terephthalate und/oder lonomere sowie Copolymere und/oder Kombinationen davon enthält und das Verhältnis der Dicke der transparenten Außenscheibe (1) zu der Summe der Dicke der transparenten Außenscheibe (1) und der transparenten Innenscheibe (3) von 0,509 bis 0,643 beträgt.

2. Transparentes Verbundglas nach Anspruch 1, wobei die Dicke der mindestens einen Polymerschicht (2) 0,8 mm bis 3,8 mm beträgt.

3. Transparentes Verbundglas nach Anspruch 1 oder 2, wobei das Verhältnis von der Dicke der transparenten Außenscheibe (1) zu der Summe der Dicke der transparenten Außenscheibe (1) der transparenten Innenscheibe (3) von 0,552 bis 0,571 beträgt.

4. Transparentes Verbundglas nach einem der Ansprüche 1 bis 3, wobei die Dicke der transparenten Außenscheibe (1) 1,70 mm bis 1,80 mm beträgt.

5. Transparentes Verbundglas nach einem der Ansprüche 1 bis 4, wobei das Verbundglas in Längsrichtung und/oder Querrichtung zweidimensional und/oder dreidimensional gebogen ist.

6. Transparentes Verbundglas nach einem der Ansprüche 1 bis 5, wobei die transparente Innenscheibe (3) oder transparente Außenscheibe (1) auf der der Polymerschicht (2) zugewandten Seite ganz oder teilweise mit mindestens einer Infrarotstrahlung abschirmenden Schicht mit einer Dicke von 1 nm bis 1000 nm beschichtet ist.

7. Transparentes Verbundglas nach einem der Ansprüche 1 bis 6, wobei mindestens eine Polymerschicht (2) eine Beschichtung aufweist, die Infrarotstrahlung absorbiert oder reflektiert.

8. Transparentes Verbundglas nach einem der Ansprüche 1 bis 7, wobei die transparente Außenscheibe (1) auf der der Polymerschicht (2) zugewandten Seite teilweise und bevorzugt rahmenförmig mit einer Breite von bevorzugt 10 mm bis 300 mm mit einer lichtundurchlässigen Schicht mit einer Dicke von 1 µm bis 500 µm beschichtet ist.

9. Verwendung eines transparenten Verbundglases nach einem der Ansprüche 1 bis 8 in der Fahrzeugverglasung.

10. Verwendung eines transparenten Verbundglases nach Anspruch 9 als Windschutzscheibe mit hoher Steinschlagfestigkeit.

## Claims

1. Transparent laminated glass for motor vehicle glazing comprising a transparent outer pane (1) made of silicate glass with a thickness of 1.6 mm to 1.8 mm, at least one polymer layer (2) with a thickness of 0.5 mm to 4.0 mm, and a transparent inner pane (3) with a thickness of 1.2 mm to 1.4 mm, wherein the at least one polymer layer contains ethylene vinyl acetates, plasticized polyvinyl butyrals, polyurethanes, polycarbonates, polyethylene terephthalates, and/or ionomers as well as copolymers and/or combinations thereof, and the ratio of the thickness of the transparent outer pane (1) to the sum of the thickness of the transparent outer pane (1) and the transparent inner pane (3) is from 0.509 to 0.643.

2. Transparent laminated glass according to claim 1, wherein the thickness of the at least one polymer layer (2) is 0.8 mm to 3.8 mm.

3. Transparent laminated glass according to claim 1 or 2, wherein the ratio of the thickness of the transparent outer pane (1) to the sum of the thickness of the transparent outer pane (1) [sic ?and] the transparent inner pane (3) is from 0.552 to 0.571.

4. Transparent laminated glass according to one of claims 1 through 3, wherein the thickness of the transparent outer pane (1) is 1.70 mm to 1.80 mm.

5. Transparent laminated glass according to one of claims 1 through 4, wherein the laminated glass is two-dimensionally and/or three-dimensionally bent in the longitudinal direction and/or the transverse direction.

6. Transparent laminated glass according to one of claims 1 through 5, wherein the transparent inner pane (3) or transparent outer pane (1) is completely or partially coated on the side facing the polymer layer (2) with at least one infrared radiation shielding layer with a thickness of 1 nm to 1000 nm.

7. Transparent laminated glass according to one of claims 1 through 6, wherein at least one polymer layer (2) has a coating that absorbs or reflects infrared radiation.

8. Transparent laminated glass according to one of claims 1 through 7, wherein the transparent outer pane (1) is partially coated on the side facing the polymer layer (2) and preferably in the shape of a frame with a width of preferably 10 mm to 300 mm with an opaque layer with a thickness of 1 µm to 500 µm.

9. Use of a transparent laminated glass according to one of claims 1 through 8 in motor vehicle glazing.

10. Use of a transparent laminated glass according to claim 9 as a windshield with high stone impact resistance.

## Revendications

1. Verre composite transparent pour vitrages de véhicules, comprenant une feuille extérieure transparente (1) en verre de silicate, d'une épaisseur de 1,6 mm à 1,8 mm, au moins une couche de polymère (2), d'une épaisseur de 0,5 mm à 4,0 mm, et une feuille intérieure transparente (3) en verre de silicate, d'une épaisseur de 1,2 mm à 1,4 mm, dans lequel ladite au moins une couche de polymère contient des polymères éthylène-acétate de vinyle, des butyrals polyvinyliques plastifiés, des polyuréthanes, des polycarbonates, des poly(téréphtalates d'éthylène) et/ou des ionomères ainsi que des copolymères et/ou des combinaisons de ceux-ci et le rapport de l'épaisseur de la feuille extérieure transparente (1) à la somme de l'épaisseur de la feuille extérieure transparente (1) et de la feuille intérieure transparente (3) s'élève à 0,509 à 0,643.

2. Verre composite transparent selon la revendication 1, dans lequel l'épaisseur de ladite au moins une couche de polymère (2) s'élève à 0,8 mm à 3,8 mm.

3. Verre composite transparent selon l'une des revendications 1 ou 2, dans lequel le rapport de l'épaisseur de la feuille extérieure transparente (1) à la somme de l'épaisseur de la feuille extérieure transparente (1) et de la feuille intérieure transparente (3) s'élève à 0,552 à 0,571.

4. Verre composite transparent selon l'une des revendications 1 à 3, dans lequel l'épaisseur de la feuille extérieure transparente (1) s'élève à 1,70 mm à 1,80 mm.

5. Verre composite transparent selon l'une des revendications 1 à 4, dans lequel le verre composite est cintré de manière bidimensionnelle et/ou tridimensionnelle dans la direction longitudinale et/ou dans la direction transversale.

6. Verre composite transparent selon l'une des revendications 1 à 5, dans lequel la feuille intérieure transparente (3) ou la feuille extérieure transparente (1), sur la face tournée vers la couche de polymère (2), est revêtue entièrement ou partiellement d'au moins une couche de protection contre le rayonnement infrarouge d'une épaisseur de 1 nm à 1000 nm.

7. Verre composite transparent selon l'une des revendications 1 à 6, dans lequel au moins une couche de polymère (2) comporte un revêtement qui absorbe ou réfléchit le rayonnement infrarouge.

8. Verre composite transparent selon l'une des revendications 1 à 7, dans lequel la feuille extérieure transparente (1) porte sur la face tournée vers la couche de polymère (2) un revêtement partiel et de préférence en forme de cadre, d'une largeur qui est de préférence de 10 mm à 300 mm, constitué d'une couche ne laissant pas passer la lumière d'une épaisseur de 1 µm à 500 µm.

9. Utilisation d'un verre composite transparent selon l'une des revendications 1 à 8 dans les vitrages de véhicules.

10. Utilisation d'un verre composite transparent selon la revendication 9 comme pare-brise offrant une résistance élevée aux impacts de gravillons.
